# EUROPEAN PATENT APPLICATION

(11) **EP 0 952 432 A1**
(43) Date of publication of application: **27.10.1999**
(21) Application number: 98112444.9
(22) Date of filing: 06.07.1998
(51) Int. Cl.: G01F 23/292

(54) **Method and device for detection of the contents of a container**

(30) Priority: 27.04.1998 CH 94898
(71) Applicant: Bossard AG, 6305 Zug (CH)
(72) Inventor: Lanter, Andrea, 9496 Balzers (LI)
(74) Representative: Blum, Rudolf Emil Ernst

(57) **Abstract**

For determination of the amount of material (5) stored in a plastic container (1), the container's side walls (2a, 2b) are equipped with infrared light sources (8) and light detectors (12). The light penetrates the side walls (2a, 2b) but may be absorbed or reflected by the stored material (5). The signals from the light detectors (12) can therefore be used to determine the top level of the material (5). The arrangement can e.g. be applied for automatically detecting when the container (1) needs to be refilled.

## Description

The invention relates to a method for the determination of an amount of material in a plastic container and a plastic container equipped for carrying out this method according to the preamble of the independent claims.

In automated storage systems and other applications, there is a need to determine the amount of material in a container, e.g. for automatically refilling the container when it is nearly empty. Typically, this is carried out by measuring the weight of the container. Suitable scales and weight sensors, are, however, expensive.

The problem to be solved by the present invention lies therefore in providing a method and container of the type mentioned above that allows a simple determination of the amount of material in a container.

The problem is solved by the method and the container according to the preamble of the independent claims.

According to these claims, the amount of material is derived from a determination of the amount of light transmitted through a wall of the container. This merely requires one or more light detectors, preferably located close to the wall, and, optionally, a suitable light source. Hence, no complicated, expensive components, such as a weight detector, are required.

In this way, the amount of material can be determined quickly. The result can either be a quantitative statement, such as the present top level of material in the container, or a qualitative one, such as a warning when the container is nearly empty.

In a preferred embodiment, infrared light is used for the measurement because it penetrates most plastic materials, even those that are non-transparent for visible light, and is less prone to be affected by inhomogeneities in the plastic.

The light detector or detectors, as well as, optionally, the light source, can be attached to the wall or walls of the plastic container, which results in a container that is able to monitor itself.

Attaching the light source and/or detector on an outer side of the wall protects these components against damage and contamination from the material stored in the container.

Preferably, a plurality of light detectors is used, arranged at different heights. Such an arrangement is able to determine the approximate top level of the material in the container.

In another embodiment of the invention, the amount of material in a plurality of containers can be measured by moving a light source and at least one light detector from one container to the next. In this way, a robot can e.g. scan a rack of containers quickly.

If double-walled containers are used, the light detector or light detectors can be arranged between the double-wall. Such an arrangement provides good protection for the light detector(s).

The invention can e.g. be used in an automated storage system comprising a plurality of containers, wherein each container is being monitored and a refill is ordered automatically when a container is nearly empty.

Further embodiments, applications and advantages of the invention are described in the dependent claims and the following description of some preferred embodiments. Such description refers to the enclosed figures, wherein:
Fig. 1 is a sectional view of a preferred embodiment of the invention,
Fig. 2 is a block diagram of the electronics of the container of Fig. 1,
Fig. 3 is an alternative arrangement of the detectors in a double-walled container, and
Fig. 4 is a further embodiment of the detector assembly.

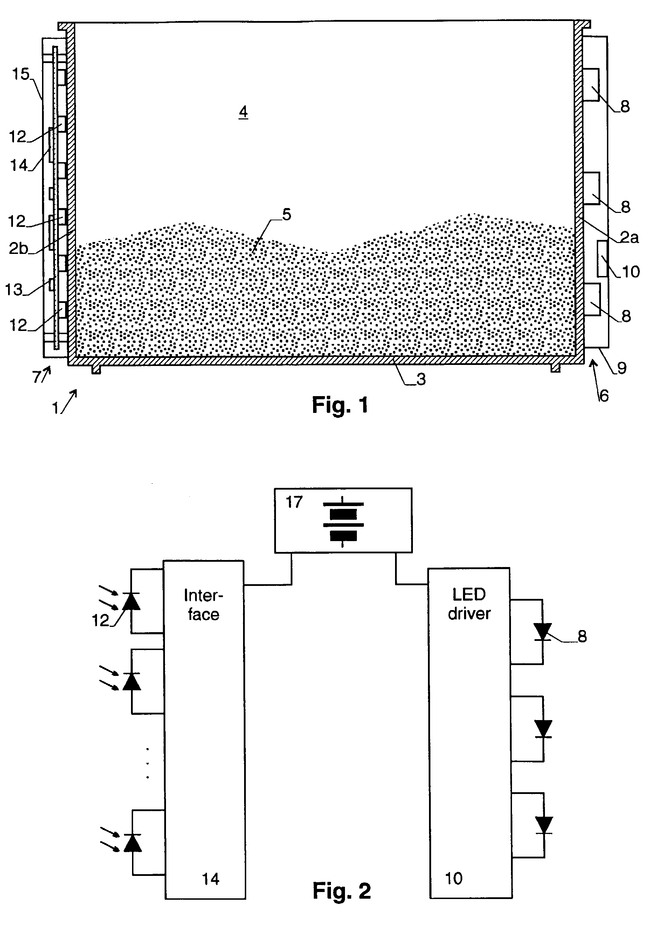

The container 1 shown in Fig. 1 can e.g. be of known type with four vertical side walls 2 and one horizontal bottom wall 3, which enclose an inner container volume 4 open at the top. In Fig. 1 the container is partially filled with a material 5, such as screws, powder, electrical components, etc. The container can e.g. be part of an automated storage system that comprises a plurality of such containers. The storage system further comprises a monitoring device for monitoring all containers and for automatically detecting if one of them is nearly empty, in which case a refill is ordered.

The walls and bottom of container 1 are made of a plastic material. Preferably, they are non-transparent for visible light and coloured.

In order to detect the amount of material 5, container 1 is equipped with a detection system comprising a light source assembly 6 and a detector assembly 7. In the present embodiment, light source assembly 6 as well as detector assembly 7 are located at opposite sides on the outside of two side walls 2a, 2b of container 1.

Light source assembly 6 comprises a plurality of infrared light emitting diodes (LEDs) 8 arranged vertically above each other and protected by a light source housing 9. Housing 9 also encloses a suitable LED driver 10.

The light of the infrared LEDs 8 is emitted through side wall 2a into the inner volume 4 of container 1. Since most plastic materials are only weakly absorbing in the infrared spectral range between 750 and 2000 nm, the light is only weakly attenuated. It crosses volume 4 and penetrates the opposing container wall 2b unless it is absorbed or scattered by the material 5 within the container.

Light detector assembly 7 attached to the outside of the opposing container wall 2b comprises a plurality of light detectors 12, such as photodiodes, arranged in a vertical row at different heights. The light detectors 12 are mounted to a printed circuit board 13, which also carries interface circuitry 14. All these components are enclosed in a light detector housing 15, which is attached to wall 2b.

Fig. 2 shows a block diagram of the electronics of the container of Fig. 1. As can be seen, LED driver 10 as well as light detector interface 14 are powered by a common power supply 17, which is also attached at a suitable position to container 1. LED interface 14 comprises circuitry for comparing the light intensity detected by the detectors 12. In a situation as shown in Fig. 1, the bottommost two light detectors will only detect a low amount of light as they are covered by material 5. The third detector from the bottom will detect a larger amount of light. The remaining detectors will receive even more light, as the third detector may still lie partially in the shadow of the top peaks of material 5. Hence, the signal from the bottom most two detectors will be at its minimum, the signal from the third detector will be between its minimum and maximum, and the signal from the remaining three detectors will be at its maximum. From this information, interface 14 will be able to derive that the top level of material 5 is somewhere between the second and third detector. This information can e.g. be transferred to a central monitoring computer.

LED driver 10 may contain known current limiting devices for driving the LEDs 8. Alternatively, it can also be designed for operating LEDs 8 in pulsed manner for reducing energy consumption, in which case interface 14 can use the pulsing frequency for distinguishing the light of LEDs 8 from ambient light. Corresponding techniques are known to the person skilled in the art.

The container shown in Figs. 1 and 2 is only one of the possible embodiments of the invention. Various modifications are possible.

For example, a single light source can be used, either placed at the outer side of wall 2a or above the container or within it.

Alternatively, a plurality of light sources can be combined with a single light detector. In this case the light sources are arranged at the outside of wall 2a and the light detector, arranged at the outside of wall 2b or above/within container 1, determines which of the light sources are sending light into the container for determining the top level of material 5. For this purpose, the light detector can e.g. measure the total intensity (which decreases when some of the light sources are hidden), or the light sources can be operated consecutively in pulsed manner for allowing an individual, consecutive measurements for the light from each light source.

In some applications, it may not be necessary to determine the exact location of the top level of material 5. It may e.g. only be required to detect when the level of material 5 falls below a given level. In such cases, a single detector and light source, at least one of which is arranged at an appropriate height, can be used.

It is also possible to place at least one light source or detector below bottom wall 3.

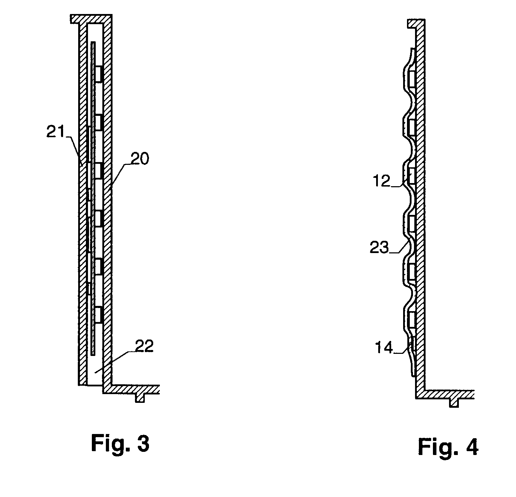

If a double-walled container is used, such as it is shown in Fig. 3, where the side walls consist of two plastic plates 20, 21 with a gap 22 between them, the light sources and/or light detectors can be arranged within this gap 22 for better protection.

It is also possible to cast the light sources and/or light detectors into the plastic of the walls while moulding the container.

As shown in Fig. 4, the light sources and/or light detectors can also be arranged on an adhesive, flexible tape 23, which is glued to the side wall of the container.

In the embodiments discussed so far, the light sources and detectors were attached to the container. Alternatively, they can be mounted to a monitoring device, such as a robot, which is moved from one container to the next for detecting if they are empty. In this case, a single set of light sources and detectors is required for monitoring a plurality of containers.

## Claims

1. A method for the determination of an amount of material (5) in a plastic container (1) characterized by the step of determining an amount of light transmitted through a wall (2a, 2b) of said container (1).

2. The method of claim 1, wherein said light is infrared light and preferably wherein said container (1) is substantially non-transparent for visible light.

3. The method of one of the preceding claims, wherein said amount of light is determined by at least one light detector (12) arranged on an outer side of said wall, preferably attached to said wall.

4. The method of claim 3, wherein said amount of light is determined by a plurality of light detectors (12), in particular wherein said light detectors (12) are positioned at different heights for detecting a filling level of said container (1).

5. The method of one of the preceding claims, further comprising the step of illuminating said material (5) with at least one light source (8) arranged outside said container, preferably attached to said container.

6. The method of one of the claims 3 or 4 and of claim 5, wherein the light from said light source (8) first penetrates a first wall (2a), then an inner volume (4) and then a second wall (2b) of said container (1).

7. Use of the method of one of the preceding claims for determining an amount of material (5) in a plurality of plastic containers (1), wherein a light source (8) and at least one light detector (12) are moved from one container to the next for consecutively measuring said containers.

8. A plastic container characterized by a detector assembly said detector assembly (7) comprising at least one light detector (12) arranged for measuring light transmitted through a wall (2a, 2b) of said container.

9. The plastic container of claim 8, wherein said at least one light detector (12) is an infrared light detector and preferably wherein said wall (2a, 2b) is substantially non-transparent for visible light.

10. The plastic container of one of the claims 8 or 9, wherein said at least one light detector (12) is attached to an outer side of said wall.

11. The plastic container of one of the claims 8 - 10 further comprising at least one light source (8).

12. The plastic container of one of the claims 8 - 11 comprising a plurality of light detectors (12) arranged above each other and means (14) for determining a filling level of said container by using the signal provided by said light detectors.

13. The plastic container of one of the claims 8 - 12, wherein said container comprises at least one double wall with an inner wall section (20) and an outer wall section (21), wherein said at least one detector (12) is arranged between said inner and said outer wall section.

14. The plastic container of one of the preceding claims, wherein said at least one detector (12) is attached to said container by means of an adhesive tape (23).
